# EUROPÄISCHE PATENTSCHRIFT

(11) **EP 2 810 778 B1**
(45) Veröffentlichungstag und Bekanntmachung des Hinweises auf die Patenterteilung: **20.01.2016**
(21) Anmeldenummer: 14169388.7
(22) Anmeldetag: 22.05.2014
(51) Int. Cl.: B41C 1/14, B41N 1/24, B41F 15/34, B32B 7/04

(54) **Verfahren zum Herstellen einer Siebstruktur**
Method for making a screen structure
Méthode pour la fabrication d'une structure d'écran

(30) Priorität: 06.06.2013 DE 102013009462
(43) Veröffentlichungstag der Anmeldung: 10.12.2014
(73) Patentinhaber: Gallus Ferd. Rüesch AG, 9016 St. Gallen (CH)
(72) Erfinder: Frick, Hans-Rudolf, CH 9100 Herisau (CH); Brocker, Heinz, CH - 9100 Herisau (CH); Greutmann, Roland, CH-9037 Speicherschwendi (CH)
(74) Vertreter: Fritz, Martin Richard

(56) Entgegenhaltungen:
- EP-A1- 0 281 351
- EP-A2- 0 182 195
- WO-A1-98/10940
- US-A- 1 594 770
- US-B1- 6 342 125

## Beschreibung

Die Erfindung betrifft ein Verfahren zum Herstellen einer Siebstruktur mit den Merkmalen von Anspruch 1 als auch eine Siebstruktur mit den oberbegrifflichen Merkmalen von Anspruch 5

### Stand der Technik

Die industrielle Anwendung von Sieben und Geweben ist aus verschiedenen Fachgebieten bekannt.
Bei der Anwendung im Bereich der Filtration ist die quadratische Maschenform die übliche Ausführungsform. Für die Druckanwendung hat man diese Maschenform übernommen. Mit den verfügbaren Fotoschichten und den bekannten Auftragsverfahren lässt sich eine vernünftige Bildauflösung nur mit einer großen Zahl von "Abstützungen" erreichen. Deshalb werden zunehmend Gewebe mit hohen Maschenzahlen verwendet.

Beim Elektronikdruck werden möglichst dünne Siebe bzw. Gewebe mit möglichst dünnem Draht eingesetzt um einen guten Durchfluss der Pasten zu gewährleisten und um allerfeinste Bildmotive zu ermöglichen.
Bei der Solarzellenbeschichtung wird ein hoher Pastenauftrag und eine präzise und feine Bildauflösung gefordert. Z.B. zum Auftragen von Leiterbahnen als Stromfinger mit möglichst geringer Abdeckung der Solarzellen, um so einen hohen Wirkungsgrad der Solarzellen sicherzustellen.
Die für den Elektronikdruck verwendeten Siebe bzw. Gewebesorten sind sehr teuer und empfindlich in der Verarbeitung, so dass sie für die Herstellung von Siebdruckplatten für den rotativen Siebdruck ungeeignet sind. Die fehlende Eignung wird auch dadurch bedingt, dass die Siebgewebe beim Rotationssieb nur in einer Richtung, nämlich der Zylinderlängsachse gespannt werden können, im Flachsiebdruck hingegen jedoch in zwei Dimensionen.

Beim Rotationssiebdruck wird die Farbe durch den hydrodynamischen Druck, welcher bei der Rotation des Siebes und bei angestellter Rakel vor der Rakelbrust entsteht, durch das Sieb transportiert. Konstruktionsbedingt lassen sich nur offene oder halboffene Rakelsysteme einsetzen, so dass der dynamische Druck von vielen Faktoren beeinflusst wird wie Viskosität, Füllmenge und Rotationsgeschwindigkeit. Durch eine Erhöhung der Rotationsgeschwindigkeit oder der Farbmenge kann der hydrodynamische Druck einfach verstärkt werden.
Ein solches Rotationssiebdruckwerk ist beispielsweise in der WO 99/19146 A1 beschrieben.

Als Grundstrukturen für Siebmaterialien werden nach dem Stand der Technik Edelstahlgewebe mit Leinenbindung verwendet. Das Verhältnis von Sieböffnung, Kontaktfläche und Gewebedicke hat sich als geeignet erwiesen. Die Dicke der Struktur, also die Gewebedicke (Ausgangsmaß vor Kalandrieren) entspricht in etwa der zweifachen Drahtstärke. Die Grundstruktur wird einem weiteren Schritt in einem Kalandrierprozess bearbeitet und so auf die gewünschte Rohgewebedicke gebracht. Auch wird so eine höhere Glätte des Siebes und damit ein geringerer Sieb- und Rakelverschleiß erreicht. Im sich anschließenden Vernickelungsvorgang wird das Gewebe zwecks einer höheren Verschleißfestigkeit verstärkt und die Abstützungspunkte im Bereich der Kreuzungspunkte vergrößert.

Ein Verfahren zur Herstellung solcher Siebmaterialien ist beispielsweise in der EP 0 182 195 A2 beschrieben.

Alternativ ist auch die Verwendung von Metallvliesen, Kunststoffgeweben, Lochblechen, Metallfolien, auch in Kombination miteinander bekannt.

Aus der US 1,594,770 A ist es bekannt, ein Gewebe durch elektrochemisches Galvanisieren mit einem Metall zu verstärken. Auch bekannt ist es, zwei Gewebelagen mittels eines dünnen Films von niedrig schmelzenden Metallen wie z.B. Zinn, Blei oder Cadmium zu verbinden.

Um die Stabilität des Siebmaterials sicherzustellen, wird in der Regel eine engmaschige Siebstruktur mit vielen Abstützpunkten gewählt. Nachteilig dabei ist, dass das theoretische Farbauftragsvolumen, welches durch die Gewebedicke und die prozentuale offene Fläche der Siebstruktur bestimmt wird, sehr beschränkt ist. Besonders dem Drucken von Linien mit geringer Breite bei gleichzeitig großer Höhe, wie das beispielsweise bei der Solarzellenfertigung erforderlich ist, sind Grenzen gesetzt.

### Aufgabenstellung

Aufgabe der vorliegenden Erfindung ist es, eine Siebstruktur zu schaffen und ein Verfahren zum Herstellen einer solchen Siebstruktur zu beschreiben, wobei die Siebstruktur eine besonders hohe Stabilität aufweist. Weitere Aufgabe ist es, eine Siebstruktur zu schaffen und ein Verfahren zum Herstellen einer solchen Siebstruktur zu beschreiben, wobei die Siebstruktur bei Anwendung im Siebdruck ein größeres Farbauftragsvolumen besitzt.

Gelöst wird diese Aufgabe durch die Verfahren mit den Merkmalen von Anspruch 1 als auch durch die Siebstrukturen mit den Merkmalen von Anspruch 5.

Das erfindungsgemäße Verfahren dient dem Herstellen einer Siebstruktur mit mindestens zwei siebartigen Gewebelagen, wobei auf einer ersten Rolle eine erste bahnförmige Gewebelage und auf einer zweiten Rolle eine zweite bahnförmige Gewebelage bereitgestellt werden. Unter einer Gewebelage wird in dieser Erfindung eine flächenförmige Struktur verstanden, welche sowohl eine gewebte Flächenstruktur als auch Lochbleche, Vliese, elektrogeformte Schablonen und Folien umfasst. Erfindungsgemäß werden die erste und die zweite Gewebelage zusammengeführt, insbesondere über Umlenkrollen, so dass die erste und die zweite Gewebelage einander kontaktieren. In vorteilhafter Weise werden die erste und die zweite Gewebelage gemeinsam metallisiert, derart, dass das aufgebrachte Metall die beiden Gewebelagen fest miteinander verbindet und ein Gewebeverbund geschaffen wird. Eine dritte Gewebelage kann bzw. weitere Gewebelagen können gleichermaßen verbunden werden, um einen noch dickeren Gewebeverbund zu schaffen.

In vorteilhafter Weiterbildung des erfindungsgemäßen Verfahrens erfolgt nachfolgend ein Spülen und Trocknen des Gewebeverbundes und gegebenenfalls ein Aufbringen einer lichtempfindlichen Fotoschicht oder einer lokal entfernbaren Polymerschicht, wenn die Siebstruktur für den Siebdruck verwendet werden soll, bevor der Gewebeverbund auf einer dritten Rolle aufgewickelt wird.

In einer ersten Variante erfolgt das Metallisieren, welches die Verbindung der beiden Gewebelagen bewirkt, als chemisches Metallisieren mit außenstromloser Metallabscheidung, als sogenannte reduktive Metallabscheidung.

In einer besonders bevorzugten zweiten Alternative erfolgt das Metallisieren, welches die beiden Gewebelagen miteinander verbindet, als elektrochemisches Galvanisieren, welches insbesondere in einem Nickelbad erfolgt.

Alternativ zum Nickelbad kann beispielsweise auch ein Kupferbad oder ein Zinnbad eingesetzt werden. Auch kann das Bad eine Kombination verschiedener Metalle enthalten, z.B. Nickel und Silber.

Die Erfindung betrifft auch eine Siebstruktur, welche insbesondere für den Siebdruck geeignet ist, mit mindestens zwei im Wesentlichen parallel zueinander angeordneten siebartigen Gewebelagen, wobei diese Siebstruktur insbesondere gemäß dem obenstehend beschriebenen Verfahren gefertigt ist. Erfindungsgemäß sind die Gewebelagen mit einer galvanisch aufgebrachten Metallschicht versehen und die Gewebelagen werden durch diese Metallschicht miteinander verbunden. In einer bevorzugten Ausführungsform besteht die Metallschicht hauptsächlich aus Nickel. Alternativ können auch andere Metalle wie beispielsweise Kupfer oder Zinn eingesetzt werden. Auch kann eine Kombination verschiedener Metalle eingesetzt werden, z.B. Nickel und Silber.
Ein alternatives Anwendungsgebiet der Siebstruktur ist die Filtration.

In vorteilhafter Weiterbildung der erfindungsgemäßen Siebstruktur ist eine jeweilige Gewebelage ein Stahlgewebe aus dünnen Drähten. Dieses weist eine hohe Stabilität auf und ist besonders einfach elektrochemisch zu galvanisieren. Alternativ kann jedoch auch ein vorbehandeltes, elektrisch leitend gemachtes Kunststoffgewebe, z.B. Polyestergewebe eingesetzt werden. Die Gewebelagen können dabei jeweils von unterschiedlichem Gewebetyp sein. Ein Gewebetyp wird hierbei definiert über die Maschenform, welche als Quadratmasche oder Längsmasche ausgeführt sein kann, als auch über die Bindungsart. Der Gewebetyp ist dabei in Abhängigkeit von der geplanten Verwendung der Siebstruktur auszuwählen.

Die erfindungsgemäßen Siebstrukturen haben den Vorteil, dass sie ein besonders großes Farbauftragsvolumen besitzen und somit ein besonders großes Verhältnis von gedruckter Linienhöhe zu Linienbreite ermöglicht wird. Ein weiterer Vorteil besteht darin, dass die Siebstrukturen eine besonders hohe Stabilität aufweisen, was ein besonders passergenaues Drucken von feinen Linien ermöglicht als auch eine höhere Lebensdauer der Siebstrukturen bewirkt.

Die beschriebene Erfindung und die beschriebenen vorteilhaften Weiterbildungen der Erfindung stellen auch in beliebiger Kombination miteinander vorteilhafter Weiterbildungen der Erfindung dar.

Hinsichtlich weiterer Vorteile und in konstruktiver und funktioneller Hinsicht vorteilhafte Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung:
- Figur 1:: ein erstes erfindungsgemäßes Verfahren zur Herstellung einer Siebstruktur
- Figur 2a - c:: verschiedene mit diesem Verfahren hergestellte Siebstrukturen
- Figur 3a:: ein alternatives Verfahren zur Herstellung einer Siebstruktur
- Figur 3b:: die auf diesem Wege hergestellte Siebstruktur
- Figur 4:: eine Siebstruktur gemäß dem Stand der Technik
- Figur 5:: die Anwendung der Siebstruktur als Rotationssiebdrucksieb

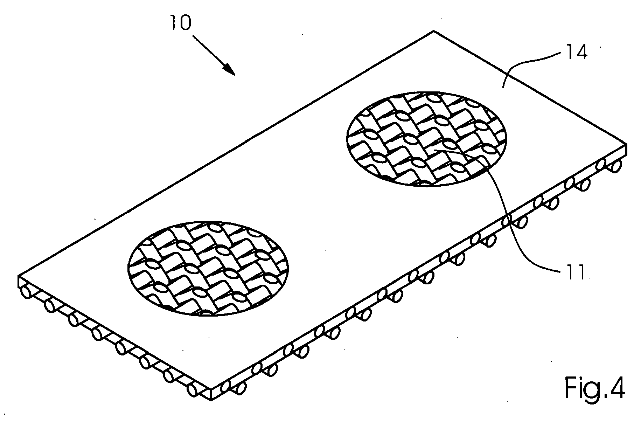

Figur 4 zeigt ein flächiges Siebmaterial 10 mit einer Gewebelage 11 gemäß dem Stand der Technik, welches einseitig mit einer Photo-Polymerbeschichtung 14 versehen ist (Direktschablone). In einer nicht dargestellten alternativen Ausführungsform kann eine bereits bebilderte Folie auf die Siebstruktur 10 aufgebracht werden (Indirektschablone). Das vernickelte flächige Siebmaterial 10 ist dabei einteilig aus einem Gewebe 11 aufgebaut. Dabei sind verschiedene Gewebeformen möglich, welche auch als Gewebetyp bezeichnet werden.

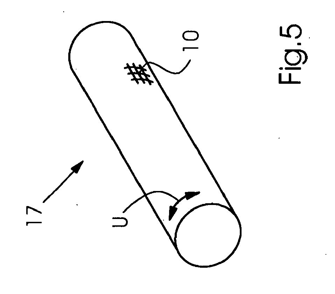

Derartige Siebmaterialien 10 finden Verwendung im Rotationssiebdruck: In Figur 5 ist ein Sieb 17 mit einem flächigen Siebmaterial 10 in zylindrischer Hülsenform für den rotativen Siebdruck angedeutet. Das Siebmaterial 10 wird dabei durch nicht näher bezeichnete Endstücke in seiner zylindrischen Form gehalten. Im Innern des Siebes 17 befindet sich ein nicht sichtbares Rakel eines Siebdruckwerks, um Farbe durch das Siebmaterial zu pressen. Die Ausrichtung des Rakels kann parallel zur Rotationsachse des Siebes 17 sein. Die Umfangsrichtung U des Siebes 17, in welche dieses beim Drucken rotiert wird, ist dabei mit einem Doppelpfeil angedeutet.

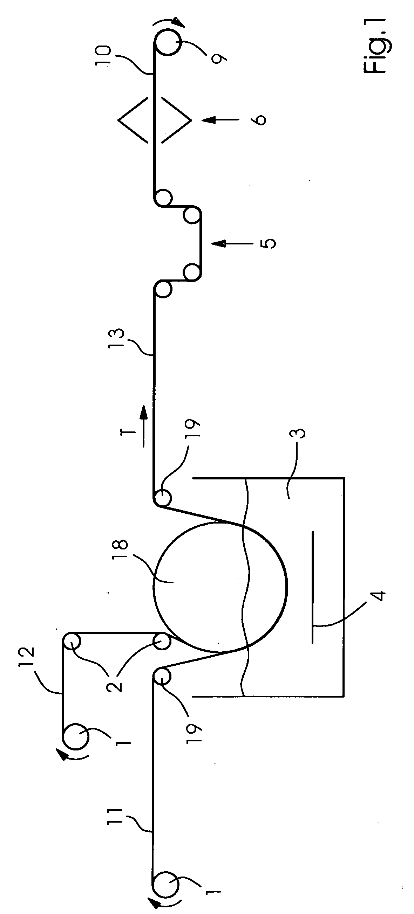

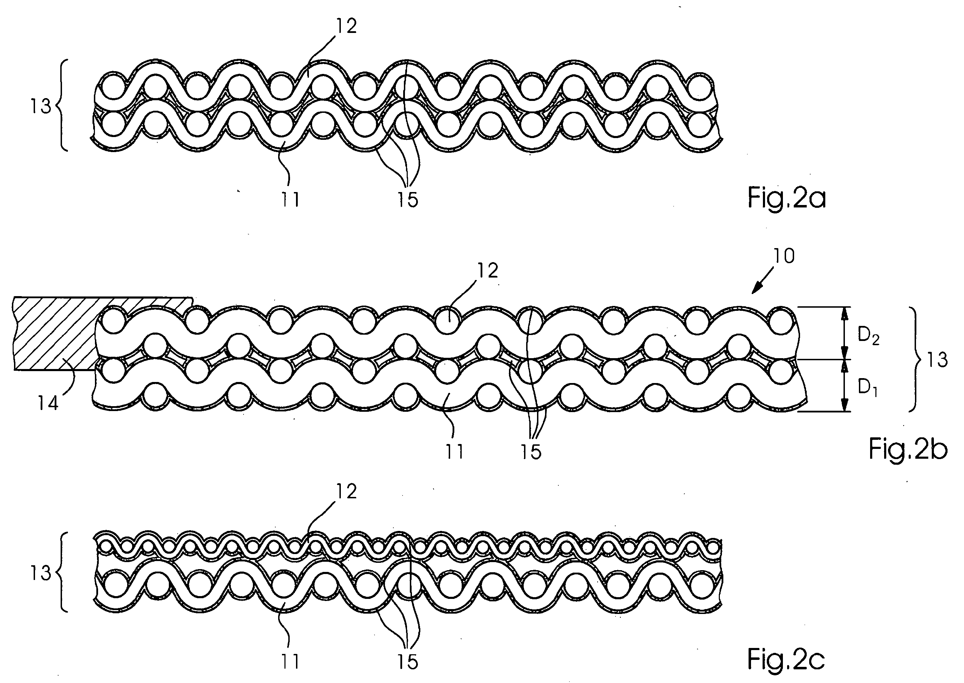

In Figur 1 ist ein erstes erfindungsgemäßes Verfahren zur Herstellung einer Siebstruktur 10 dargestellt. Auf einer ersten Vorratsrolle 1 wird eine erste Gewebelage 11 bereitgestellt und auf einer zweiten Vorratsrolle 1 wird eine zweite Gewebelage 12 bereitgestellt. Die Gewebelagen 11, 12 können bereits vorkonditioniert, z.B. vernickelt sein. Die beiden Gewebelagen 11, 12 werden über Umlenkrollen in Transportrichtung T zusammengeführt, derart, dass sich die erste Gewebelage 11 und die zweite Gewebelage 12 kontaktieren. Kontakt muss dabei spätestens im Bereich der Tauchwalze 18 hergestellt sein. Die beiden Gewebelagen 11, 12 werden um eine Kathode 19 und die Tauchwalze 18 herum durch ein Galvanikbad 3, zum Beispiel ein Nickelbad mit Anode 4, hindurch geführt und dabei elektrochemisch galvanisiert. Im Falle der Verwendung eines Nickelbades 3 werden erste Gewebelage 11 und zweite Gewebelage 12 derart vernickelt, dass beide Gewebelagen 11, 12 fest miteinander verbunden sind und so ein Gewebeverbund 13 geschaffen wird. Der Gewebeverbund 13 kann in einer nachfolgenden Waschstation 5 ausgewaschen und in einer nachfolgenden Trockenstation 6 getrocknet werden, bevor er auf eine Aufwickelrolle 9 aufgewickelt wird. Während in Figur 1 nur ein Galvanikbad 3 dargestellt ist, kann der Galvanisierungsprozess in mehreren aufeinanderfolgenden Schritten erfolgen, beispielsweise unter Verwendung von mehreren Galvanikbädern 3.
Verschiedene gemäß diesem Verfahren hergestellte Siebstrukturen 10 werden in Figur 2a - c dargestellt. Die Siebstruktur 10 kann dabei eine Fotoschicht 14 aufweisen, welche die Verwendung der Siebstruktur 10 im Siebdruck ermöglicht. Die Siebstruktur 10 besitzt einen Gewebeverbund 13, welcher sich aus einer ersten Gewebelage 11 und einer zweiten Gewebelage 12 zusammensetzt. Die erste Gewebelage 11 und die zweite Gewebelage 12 sind durch eine Metallschicht 15 miteinander verbunden. Auch an der Oberseite der ersten Gewebelage 11 und an der Unterseite der zweiten Gewebelage 12 wird eine Metallschicht 15 aufgebracht. Bei der Metallschicht 15 kann es sich dabei beispielsweise um eine Nickelschicht handeln, welche durch Vernickeln in einem galvanischen Nickelbad aufgebracht wurde. Die Dicke des Gewebeverbundes 13 setzt sich dabei zusammen aus der Dicke D1 der ersten Gewebelage 11 und der Dicke D2 der zweiten Gewebelage 12. Zusätzlich trägt auch die zweifache Dicke der aufgebrachten Metallschicht 15 zur Gesamtdicke bei. Es wird ersichtlich, dass aufgrund der größeren Dicke D1 + D2 des Gewebeverbunds 13 im Vergleich zu einer Dicke D1 der ersten Gewebelage bzw. D2 der zweiten Gewebelage eine Siebstruktur mit höherer Stabilität geschaffen wurde. Wird die Siebstruktur 10 für den Siebdruck verwendet, so bietet diese ein erhöhtes Farbauftragsvolumen, da dieses unmittelbar von der Dicke D1 + D2 der Siebstruktur 10 abhängt. Fig. 2c zeigt eine Siebstruktur 10, welche aus zwei unterschiedlichen Gewebelagen 11 und 12 besteht.
In einer alternativen, nicht dargestellten Ausführungsvariante können die erste Gewebelage 11 und die zweite Gewebelage 12 jeweils in einem vorangehenden Schritt vorab separat mit einer Metallschicht 15 versehen werden. Die so metallisierten Gewebelagen 11, 12 können dann wie oben beschrieben durch eine zusätzliche Metallschicht 15 miteinander verbunden werden. In anderen Worten: es erfolgt zuerst ein Galvanisieren der jeweiligen Gewebelagen wie allgemein üblich. Nachfolgend werden die galvanisierten Gewebelagen gemäß der Erfindung miteinander verbunden.

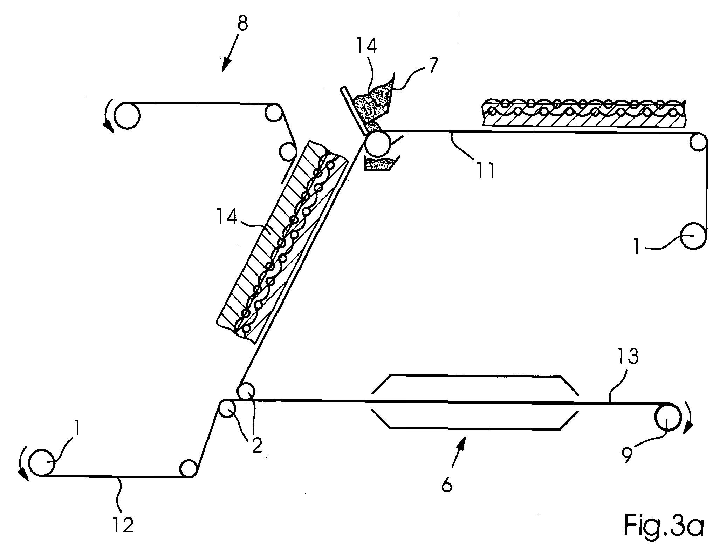

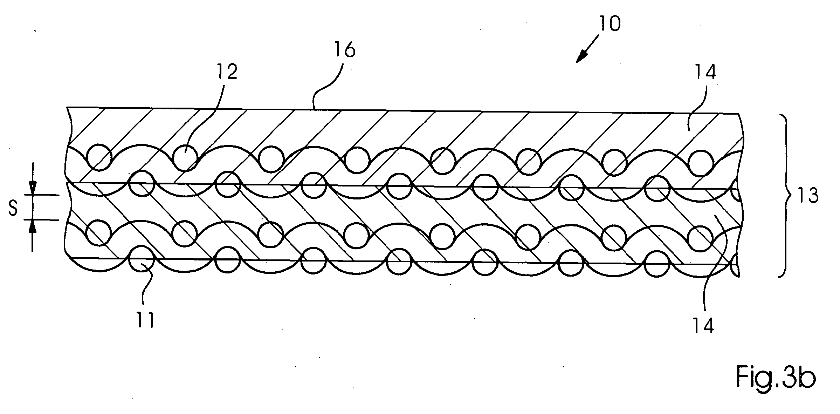

In Figur 3a ist ein alternatives Verfahren zur Herstellung einer Siebstruktur 10 dargestellt. Auf einer ersten Vorratsrolle 1 wird eine erste Gewebelage 11, welche unbeschichtet oder vorbeschichtet sein kann, und auf einer zweiten Vorratsrolle 1 eine zweite Gewebelage 12 bereitgestellt. Die erste Gewebelage 11 wird dabei durch ein Auftragswerk 7 mit einer Emulsion 14 versehen. Nachfolgend kann in einer Einrichtung 8 ein Kapillarfilm auf die Emulsionsschicht 14 aufgebracht werden. Die so vorbereitete erste Gewebelage 11 wird über Umlenkrollrollen 2 mit einer zweiten Gewebelage 12 zusammengeführt und beide Gewebelagen 11, 12 aneinandergepresst, so dass ein Gewebeverbund 13 entsteht. Um eine stabile Verbindung der beiden Gewebelagen 11, 12 sicherzustellen, wird die Emulsion in einer Trockenstation 6 getrocknet, bevor der Gewebeverbund 13 auf einer Aufwickelrolle 9 aufgewickelt wird. Eine gemäß diesem Verfahren hergestellte Siebstruktur 10 ist in Figur 3b dargestellt. Eine erste Gewebelage 11 und eine zweite Gewebelage 12 sind durch zwei Schichten von Emulsionen 14 zusammenkaschiert und bilden einen Gewebeverbund 13. Der Abstand S zwischen den beiden Gewebelagen 11, 12 kann variiert werden um die Dicke des Gewebeverbundes 13 zu beeinflussen. Auf einer Seite des Gewebeverbunds 13 kann zusätzlich eine Trägerfolie 16 vorgesehen sein.

### Bezugszeichenliste

- 1: Vorratsrolle
- 2: Umlenkrolle
- 3: Galvanikbad, z. B. Nickelbad
- 4: Anode
- 5: Waschstation
- 6: Trockenstation
- 7: Auftragswerk
- 8: Einrichtung zum Aufbringen eines Kapillarfilmes
- 9: Aufwickelrolle
- 10: Siebstruktur
- 11: erste Gewebelage
- 12: zweite Gewebelage
- 13: Gewebeverbund
- 14: Emulsion / Fotoschicht / Hotmelt-Klebstoff
- 15: Metallschicht
- 16: Trägerfolie
- 17: Rotationssiebdrucksieb
- 18: Tauchwalze
- 19: Kathode

- D1: Dicke der ersten Gewebelage
- D2: Dicke der zweiten Gewebelage
- S: Abstand der Gewebelagen
- T: Transportrichtung
- U: Umfangsrichtung

## Patentansprüche

1. Verfahren zum Herstellen einer Siebstruktur (10) mit mindestens zwei Gewebelagen (11, 12),
wobei auf einer ersten Rolle (1) eine erste Gewebelage (11) und auf einer zweiten Rolle (1) eine zweite Gewebelage (12) bereitgestellt werden,
wobei die erste und die zweite Gewebelage (11, 12) zusammengeführt werden und einander kontaktieren,
wobei die erste und die zweite Gewebelage (11, 12) gemeinsam metallisiert werden und das aufgebrachte Metall (15) die beiden Gewebelagen (11, 12) fest miteinander verbindet und ein Gewebeverbund (13) geschaffen wird.

2. Verfahren zum Herstellen einer Siebstruktur nach Anspruch 1
**dadurch gekennzeichnet,**
**dass** ein nachfolgendes Spülen (5) und Trocknen (6) des Gewebeverbundes (13) und ggfs. ein Aufbringen einer lichtempfindlichen Fotoschicht (14) oder einer lokal entfernbaren Polymerschicht erfolgt bevor der Gewebeverbund (13) auf einer dritten Rolle (9) aufgewickelt wird.

3. Verfahren zum Herstellen einer Siebstruktur nach Anspruch 1 oder 2
**dadurch gekennzeichnet,**
**dass** das Metallisieren als chemisches Metallisieren mit außenstromloser Metallabscheidung (15) erfolgt.

4. Verfahren zum Herstellen einer Siebstruktur nach Anspruch 1 oder 2
**dadurch gekennzeichnet,**
**dass** das Metallisieren als elektrochemisches Galvanisieren erfolgt, insbesondere in einem Nickelbad (3).

5. Siebstruktur (10) insbesondere für den Siebdruck mit mindestens zwei im Wesentlichen parallel zueinander angeordneten Gewebelagen (11, 12), insbesondere gefertigt gemäß dem Verfahren nach Anspruch 1,
**dadurch gekennzeichnet,**
**dass** die Gewebelagen (11, 12) mit einer galvanisch aufgebrachten Metallschicht (15) versehen und durch die Metallschicht (15) miteinander verbunden sind, und dass insbesondere die Metallschicht (15) hauptsächlich aus Nickel besteht.

6. Siebstruktur nach Anspruch 5,
**dadurch gekennzeichnet,**
**dass** eine jeweilige Gewebelage (11, 12) ein Stahlgewebe ist.

7. Siebstruktur nach Anspruch 5 bis 6,
**dadurch gekennzeichnet,**
**dass** die Gewebelagen (11, 12) jeweils von unterschiedlichem Gewebetyp sind.

## Claims

1. Method for manufacturing a screen structure (10) having at least two mesh layers (11, 12),
wherein a first mesh layer (11) is provided on a first reel (1) and a second mesh layer (12) is provided on a second reel (1),
wherein said first and second mesh layers (11, 12) are brought together so that they contact each other,
wherein said first and second mesh layers (11, 12) are jointly metallized and wherein the applied metal (15) firmly bonds said two mesh layers (11, 12) together to create a composite mesh (13).

2. Method for manufacturing a screen structure according to Claim 1,
**characterized in**
**that** a subsequent rinsing (5) and drying (6) of the composite mesh (13) is carried out and, if desired, an application of a photosensitive layer (14) or a locally removable polymeric layer before said composite mesh (13) is wound onto a third reel (9).

3. Method for manufacturing a screen structure according to Claim 1 or 2,
**characterized in**
**that** the metallizing is a chemical metallizing process involving electroless metal deposition (15).

4. Method for manufacturing a screen structure according to Claim 1 or 2,
**characterized in**
**that** the metallizing process is an electrochemical electroplating process carried out in particular in a nickel bath (3).

5. Screen structure (10), in particular for screen printing, including at least two mesh layers (11, 12) that are arranged to be essentially parallel to each other, in particular a screen structure (10) manufactured in accordance with the method according to Claim 1,
**characterized in**
**that** the mesh layers (11, 12) are provided with a metal layer (15) that is applied in an electroplating process and are bonded to each other by said metal layer (15), and that the metal layer (15) in particular essentially consists of nickel.

6. Screen structure according to Claim 5,
**characterized in**
**that** a respective mesh layer (11, 12) is a steel mesh.

7. Screen structure according to Claims 5 to 6,
**characterized in**
**that** said mesh layers (11, 12) are of different mesh types.

## Revendications

1. Procédé pour la fabrication d'une structure sérigraphique (10) ayant au moins deux couches de tissu (11, 12),
la première couche de tissu (11) étant placée sur une première bobine (1) et une seconde couche de tissu (12) sur une deuxième bobine (1
la première et la seconde couche de tissu (11, 12) étant rassemblées et mises en contact,
la première et la seconde couche de tissu (11, 12) étant métallisées en commun et le métal déposé (15) reliant les deux couches de tissu (11, 12) fixement entre elles, formant ainsi un tissu composite (13).

2. Procédé pour la fabrication d'une structure sérigraphique selon la revendication 1
**caractérisé en ce**
**qu'**un rinçage ultérieur (5) suivi d'un séchage (6) du tissu composite (13) et, le cas échéant, une application d'une couche photosensible (14) ou une couche de polymère localement détachable est réalisée avant que le tissu composite (13) soit enroulé sur une troisième bobine (9).

3. Procédé pour la fabrication d'une structure sérigraphique selon la revendication 1 ou 2,
**caractérisé en ce**
la métallisation est réalisée comme une métallisation électrochimique, par précipitation de métal (15) sans courant extérieur.

4. Procédé pour la fabrication d'une structure sérigraphique selon la revendication 1 ou 2,
**caractérisé en ce**
la métallisation est réalisée comme une galvanisation électrochimique, en particulier dans un bain de nickel (3).

5. Structure sérigraphique en particulier pour la sérigraphie avec au moins deux couches de tissu sensiblement parallèles entre elles (11, 12), en particulier fabriquée selon le procédé de la revendication 1,
**caractérisé en ce**
**que** les couches de tissu (11, 12) sont munies d'une couche de de métal (15) appliquée par galvanisation et sont reliés entre elles par la couche métallique (15), et en ce que la couche métallique (15) est en particulier constituée principalement de nickel.

6. Structure sérigraphique selon la revendication 5,
**caractérisé en ce**
**que** la couche de tissu respective (11, 12) est un tissu d'acier.

7. Structure d'écran selon la revendication 5 à 6,
**caractérisé en ce**
**que** les couches de tissu (11, 12) sont chacune d'un type de tissu différent.
